(19) Europäisches Patentamt
European Patent Office
Office européen des brevets

(11) Publication number: **0 206 565 B1**

## EUROPEAN PATENT SPECIFICATION

(45) Date of publication of patent specification: **04.09.91**  (51) Int. Cl.⁵: **G06F 15/21, G06F 15/40**

(21) Application number: **86304165.3**

(22) Date of filing: **02.06.86**

(54) **Retail trading systems.**

(30) Priority: **17.06.85 GB 8515323**

(43) Date of publication of application:
**30.12.86 Bulletin 86/52**

(45) Publication of the grant of the patent:
**04.09.91 Bulletin 91/36**

(84) Designated Contracting States:
**AT BE CH DE FR GB IT LI LU NL SE**

(56) References cited:
**EP-A- 0 109 189**
**WO-A-83/02839**
**GB-A- 2 105 075**

(73) Proprietor: **Coats Viyella plc**
**Bank House 9 Charlotte Street**
**Manchester M1 4ET(GB)**

(72) Inventor: **Hugh, Donald Gordon**
**7 Ennerdale Close Clitheroe**
**Lancashire BB7 2PH(GB)**
Inventor: **Lindsay, Hewitt Jeffrey**
**Paloalto 6 College Way**
**Northwood Middlesex(GB)**

(74) Representative: **McNeight, David Leslie et al**
**McNeight & Lawrence Regent House Heaton**
**Lane**
**Stockport Cheshire SK4 1BS(GB)**

## Description

This invention relates to retail trading systems.

The invention is particularly concerned with systems for trading large items that need to be delivered to rather than carried away by the customer, and items that may be customized at least to some extent or fitted. An example is carpets, which are large and require fitting.

If a carpet retail outlet is to carry a comprehensive inventory of carpets, it must necessarily be housed in premises of some size, which, in a prime shopping area, would involve high rent and rates. It is usual therefore to site such premises out of town. Nevertheless, there are problems involved with the display of many carpets, and customers can find it daunting to select from extensive arrays of patterns, textures and colourways.

Moreover, the carrying of such a comprehensive stock as will at least permit inspection "in the piece" is itself an expensive business.

Accordingly, there is a tendency to sell carpet by sample. The retail premises need carry no or hardly any stock, and can be accommodated in more compact premises far less expensively, even on prime retail sites.

However, a disadvantage of this is that it is difficult for customers to appreciate, from a small sample, how a carpet will look in their room setting, and how it will relate to their furniture and other effects, for example. Sometimes photographs of a "typical" room are included in a pattern swatch.

Sale by sample involves, moreover, the preparation of a transaction record on the basis of a sample identifier - usually an alphanumeric code. The identifier is often on an adhesive ticket, and mistakes can arise through loss of or damage to, misreading or wrongly transcribing the identifier.

GB-A-2,105,075 describes a system and method by which items can be displayed pictorially on a screen either photographically or optically or using a computer-type VDU to allow selection by a prospective purchaser. The system provides a random selector for items from a memory, and a selector for selecting items from the memory according to information entered into the system, and simultaneously displaying related information from a second memory. Items may be selected according to criteria, e.g. price, colour, availability, ease of packaging and so on to help the prospective purchaser of a gift to make a selection. Once items are selected, purchase is effected through a sales girl entering information supplied from the second memory into a second computer.

Where a large number of items are held for display, or where multiple purchases are made, it is likely that errors can be introduced at this information entering point. GB-A-2,105,075 speaks of a station being staffed by two salesgirls and if such are experienced, mistakes should not happen too frequently; if such experienced help is to be dispensed with, however, letting the customer enter the information, mistakes are likely to arise.

The present invention provides a system by which this disadvantage can be avoided.

The invention comprises a system for retail trading comprising an image storage arrangement storing images of items being traded, an image index arrangement connected with the said storage arrangement and containing identifiers for the images therein, an image retrieval arrangement and display means for displaying retrieved images, and a transaction data processing arrangement including a data input arrangement, characterised in that the data processing arrangement has a transaction specifying mode in which the identifier for the currently displayed image is automatically input from the index arrangement into a transaction record being prepared by the transaction data processing arrangement according to transaction data input at the data input arrangement and by which the displayed image identifier is automatically input from the index arrangement.

Said image storage arrangement may comprise video disc means and said display means a video screen.

Said input arrangement may comprise an alphanumeric keyboard.

Said input arrangement may comprise a function key operable to put the input arrangement into an image retrieval mode.

The image index arrangement may contain a categorised image index, and the said retrieval arrangement may then be operable to retrieve images on a category basis, preferably, selectively, images falling into two or more categories. Such retrieved images may be automatically displayable sequentially.

The stored images may be composite images comprising a first image component generated from an item being traded and a second image component generated by computer software. The two components of the composite image may be held in different parts of the said image storage arrangement. The second component may comprise colourway information. The first image component may be associated with mask information limiting the displayed area of the second image component to the area not occupied by the first image component.

The system may also comprise colour input means connectable to said image retrieval arrangement and operable to cause said image retrieval arrangement to select only images having colourways related to a colour input via said colour input means.

The system may also be operable to display price and/or availability information with a selected image.

The system may have means for connection to a remote station for transmission of transaction information to said remote station and transmission of price and/or availability information from said station.

Embodiments of systems for retail trading will now be described with reference to the accompanying drawings, in which:-

Figure 1    is a diagrammatic representation of a system for trading e.g. carpets,

Figure 2    is a diagrammatic representation of an image storage and index arrangement,

Figure 3    is a diagrammatic illustration of a retrieval arrangement operable to retrieve images on a category basis,

Figure 4    is a representation of a composite image,

Figure 5    is a representation of another composite image,
and

Figure 6    is a representation of a component of the image shown in Figure 5.

The system for retail trading illustrated in the drawings comprises an image storage arrangement 11 storing images of items being traded such for example as carpets, furniture, clothing, household textiles, homewares and even motor vehicles. The image storage arrangement 11 may comprise a video disc arrangement of the kind, commercially available, that have controlled access to images stored thereon so that a single video frame can be addressed. A Phillips Laservision VP35 disc player is suitable.

The storage arrangement can also comprise a frame store 11a for storing image information in digital form for use in image processing applications, referred to below.

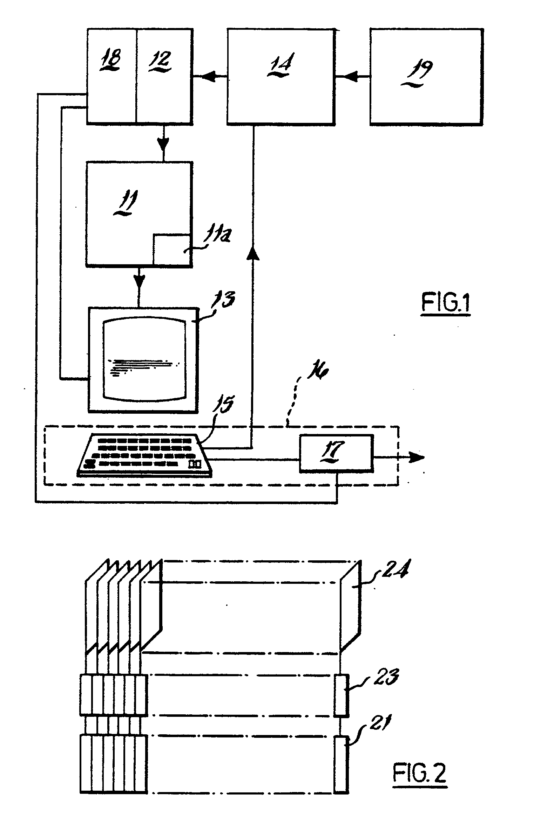

An image index arrangement 12, connected with the storage arrangement 11, contains identifiers - for example - alphanumeric codes 21 in digital form - in random access memory (Figure 2) having common memory addresses 23 with the address of the individual images 24 in the image store 11.

A video screen 13 receives video signals from the image store 11. Individual images/frames are retrieved from the index arrangement 12 by an image retrieval arrangement 14 controlled by signals from an input arrangement 15 comprising a standard alphanumeric keyboard which is part of a transaction data processing arrangement 16 which also includes a data output arrangement 17 which may comprise a printer or a visual display unit or a modem connecting the arrangement to a remote arrangement adapted to receive the data or simply a storage arrangement connectable to any of the above for subsequent interrogation.

Associated with the index arrangement 12 can also be a database 18 accessible in the same way and containing information on price and/or availability of items which images are stored in the image storage arrangement 11. Information from the database 18 can be called up to appear on the video screen 13, either superimposed on the video image or on a separate screen alternatable with the video image. A dedicated or special function key on the keyboard 15 can be used to call for (and cancel) the information display.

Likewise, a special function key on the keyboard 15 is operable to put the input arrangement 16 into a transaction specifying mode in which the identifier for the currently displayed image is automatically input from the index arrangement 12 into the output arrangement 17 as part of a transaction record. The remainder of the record - date, customer's name and address, number of items ordered, price, credit details, discount, method of payment, delivery date and so on - can be entered from the keyboard. More sophisticated programming can permit information from the data base being available - say price - and operated on by standard operators - say price multiplied by (keyboard input) number of items can given gross price, operated on in turn by a standard discounting arrangement (say 5% off for cash), or by a standard credit arrangement so as to add on a percentage interest and divide the total by twelve or twentyfour to give a monthly payment.

Software for this transaction specifying mode of the input arrangement can be, with considerable user advantage, menu driven. The first menu might for example contain the following options:-

Display details

Place Order

Selecting "Display details" (by whatever means is chosen, say by moving, using the keyboard space bar or line feed key, a cursor or selection device next to "Display details" on the screen) throws up on to the screen the details of price/availability held in the database 18, together with a prompt that might say "Press Cancel to exit". Selecting "Place order" can call up a series of prompts such as "Enter customer's name", "Enter customer's address", and "Enter amount required", as well as subsidiary menus such as

Payment method:-

Cash

Credit

Cheque

Credit card

which might then have another menu called up, in the event "Credit card" is selected listing accepted cards.

The keyboard 15 also has a special function key putting it into an image selection mode. This may also be menu driven, the menus offering choices depending on the items being traded.

For selling carpets, a typical first menu might comprise a choice of price ranges, followed by a menu offering a choice of plain or patterned, another offering a choice of construction, another, pile type, and another, colour.

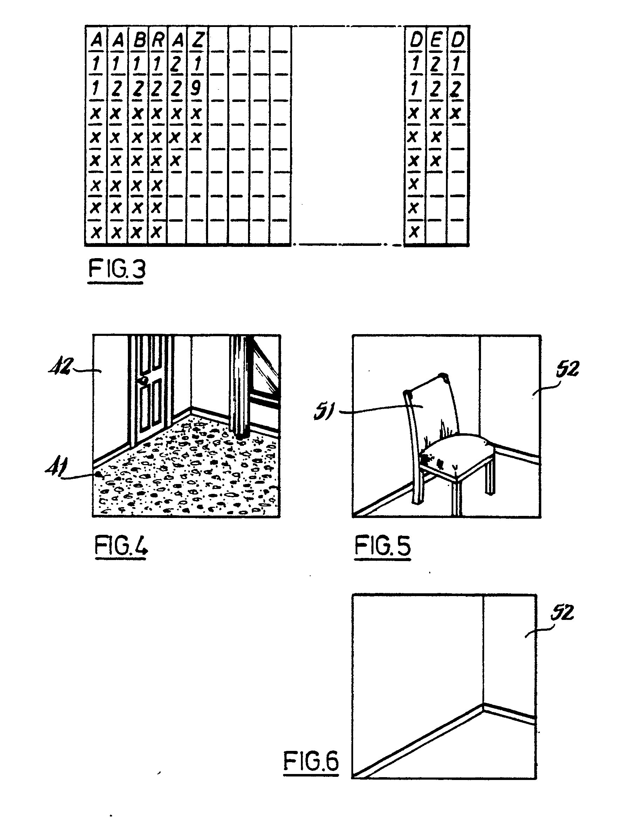

The identifier used in the index arrangement 12 may contain coding, as illustrated in Figure 3 categorising the items into the choices indicated above or such other choices as may be appropriate to whatever item is being traded. For example the first symbol in the identifier might indicate a price range, the second whether the carpet is plain (1) or patterned (2), the third the choice of construction (e.g. Wilton, Axminster, tufted, foam-backed, etc) and so on.

The keyboard 15 might then, by pressing an appropriate key, be put into an automatic sequencing mode, in which all carpets conforming to the selection are displayed in sequence, a 'pause' key being available for taking a longer look than the automatic sequence allows (which might be just a few seconds for instance). Or the sequencing might be, at will, effected manually be pressing an "Advance" key. In any event, the selected image is displayed on the video screen 11 and the associated identifier made available to the transaction data processing arrangement 17 as well as the associated database information being made available both to the screen 13 and the processing arrangement 17.

The images stored in the storage arrangement can with advantage show the item against a background - a carpet, for example, can be shown in a room setting, and the same carpet can be shown in different room settings to help the customer choose the ideal carpet, whether as to colourway, or size or nature of pattern, for his decorating scheme or furniture.

Each image can of course be complete in itself, so that to cover one carpet in ten different room settings, ten image frames are provided in the storage arrangement 11. Such ten image frames can be produced by imaging an actual carpet in ten different actual rooms. This will clearly produce visual images of high quality, but may be tedious and costly in practice.

The ten images may, on the other hand, be composite images, in which, for example, only the carpet is imaged from an actual carpet, the remainder of the image being computer generated, either from scratch or from an image of an actual room which has been image-processed so that for example the colours of the walls, ceiling and woodwork are false, and are different or in different combinations (or colourways) for each of the ten images. Figure 4 is a representation of such a composite image where the carpet area 41 of the image, which is produced from a video picture of an actual carpet, is used together with a setting or background image component 42. A series of such images is produced with different false colour colourways for the background image component 42.

Figure 5 shows another composite image in which an image 51 - shot from actuality - of a chair is shown against a room background 52. Figure 6 shows the background 52 only, which may be so simple as to be readily computer-generated without the need to realise the same in practice. The chair image 51 is accompanied by masking information which cancels the background component of the computer generated image, so as not to interfere with the real image component. In this way, differently shaped chairs or other articles can be shown against the same background, and the background may itself be changed as to colourway (among other things) so as to provide a series of composite images. The colourway information can be part of the computer software and provide operators acting on a basic computer generated setting design to change the colourway. In this way, the provision of a selected twenty (say) channels is provided in software instead of requiring twenty separate video frames to be stored.

This could, alternatively, be a way of generating video frames for storage, which would reduce computation and hence access time. However, where the changing information in the screen is background information, it may be desirable first to locate the item being traded and then to apply software to change the background through a sequence of colours.

A colour sensor 19 (Figure 1) can be used to select retrieved frames to a colour of a sample, perhaps of a favourite curtain material or piece of furniture, proffered for its examination by an intending purchaser. Instead of actually bringing in a sample (which might be difficult in the case of a large item of furniture) a colour matching card can be supplied to be compared with the original and brought in instead for examination. The colour sensed can then be translated into an appropriate colour code and used instead of a keyboard input to select a colour category.

The invention is not to be limited to the precise details described and illustrated. The video screen 13 could, for example, be replaced by any other suitable display arrangement such for example as a slide projector.

**Claims**

1. A system for retail trading comprising an image storage arrangement (11) storing images of items being traded, an image index arrangement (12) connected with the said image storage arrangement (11) and containing identifiers for the images therein, an image retrieval arrangement (14) and display means (13) for displaying retrieved images, and a transaction data processing arrangement (16) including a data input arrangement (15), characterised in that the transaction data processing arrangement (16) has a transaction specifying mode in which the identifier for the currently displayed image is automatically input from the image index arrangement (12) into a transaction record being prepared by the transaction data processing arrangement (16) according to transaction data input at the data input arrangement (15) and by which the displayed image identifier is automatically input from the image index arrangement (12).

2. A system according to claim 1, in which said image storage arrangement (11) comprises video disc means and said display means (13) a video screen.

3. A system according to claim 1 or claim 2, in which said input arrangement (15) comprises an alphanumeric keyboard.

4. A system according to any one of claims 1 to 3, in which said data input arrangement (15) comprises a special function key operable to put the transaction data processing arrangement (16) into said transaction specifying mode.

5. A system according to any one of claims 1 to 4, in which said data input arrangement (15) comprises a special function key operable to put the input arrangement into a image retrieval mode.

6. A system according to any one of claims 1 to 5, in which the image index arrangement (12) contain a categorised image index and the said retrieval arrangement (14) is operable to retrieve images on a category basis.

7. A system according to claim 6, in which said image retrieval arrangement (14) is operable to retrieve images selectively falling into two or more categories.

8. A system according to claim 6 or claim 7, in which said image retrieval arrangement (14) is operable automatically to retrieve images sequentially.

9. A system according to any one of claims 1 to 8, in which said stored images are composite images comprising a first image component (41) generated from an item being traded and a second image component (42) generated by computer software.

10. A system according to claim 9, in which the two components of the composite image are held in different parts of the said image storage arrangement (11).

11. A system according to claim 9 or claim 10, in which said second component (42) comprises colourway information.

12. A system according to any one of claims 9 to 11, in which said first image component (41) is associated with mask information limiting the displayed area of the second image component (42) to the area not occupied by the first image component (41).

13. A system according to any one of claims 1 to 12, comprising colour input means (19) connectable to said image retrieval arrangement (14) and operable to cause said retrieval arrangement (14) to select only images having colourways related to a colour input via said colour input means.

14. A system according to any one of claims 1 to 12, operable to display price and/or availability information associated with a selected image.

15. A system according to any one of claims 1 to 14, having means (17) for connection to a remote station for transmission of transaction information to said remote station and transmission of price and/or availability information from said station.

**Revendications**

1. Système de commercialisation de détail, comprenant un moyen (11) de mémorisation d'images mémorisant les images d'articles commercialisés, un moyen (12) formant un répertoire d'images connecté audit moyen (11) de mémorisation d'images et contenant des identificateurs associés aux images qu'il comporte, un moyen (14) de recherche d'images et un moyen d'affichage (13) permettant d'afficher les images retrouvées, et un moyen (16) de traitement de données de transaction comportant un moyen (15) d'entrée de données, caractérisé en ce que le moyen (16) de traitement de données de transaction possède un mode d'indication de transaction dans lequel L'identificateur associé à l'image affichée courante est automatiquement introduit, depuis le moyen (12) formant un répertoire d'image, dans un enregistrement de transaction préparé par le moyen (16) de traitement de données de transaction en fonction de données de transaction introduites dans le moyen (15) d'entrée de données et par lequel l'identificateur de l'image affichée est automatiquement introduit depuis le moyen (12) formant un répertoire d'image.

2. Système selon la revendication 1, dans lequel ledit moyen (11) de mémorisation d'images comprend un moyen du type disque vidéo et ledit moyen d'affichage (13) un écran vidéo.

3. Système selon la revendication 1 ou 2, dans lequel ledit moyen d'entrée. (15) comprend un clavier alphanumérique.

4. Système selon l'une quelconque des revendications 1 à 3, dans lequel ledit moyen (15) d'entrée de données comprend une touche de fonction spéciale servant à placer le moyen (16) de traitement de données de transaction dans ledit mode d'indication de transaction.

5. Système selon l'une quelconque des revendications 1 à 4, dans lequel ledit moyen (15) d'entrée de données comprend une touche de fonction spéciale servant à placer le moyen d'entrée dans un mode de recherche d'images.

6. Système selon l'une quelconque des revendications 1 à 5, dans lequel le moyen (12) formant un répertoire d'images contient un répertoire d'images classé par catégories et ledit moyen de recherche (14) a pour fonction de retrouver des images sur la base des catégories auxquelles elles appartiennent.

7. Système selon la revendication 6, dans lequel ledit moyen (14) de recherche d'images a pour fonction de retrouver des images appartenant sélectivement à deux catégories ou plus.

8. Système selon la revendication 6 ou 7, dans lequel ledit moyen (14) de recherche d'images a pour fonction, automatiquement, de retrouver des images de manière séquentielle.

9. Système selon l'une quelconque des revendications 1 à 8, dans lequel lesdites images mémorisées sont des images composites comprenant une première composante d'image (41) produite à partir d'un article commercialisé et une deuxième composante d'image (42) produite par un logiciel d'ordinateur.

10. Système selon la revendication 9, dans lequel les deux composantes de l'image composite sont maintenues dans des parties différentes dudit moyen (11) de mémorisation d'images.

11. Système selon la revendication 9 OU 10, dans lequel ladite deuxième composante (42) comprend une information de tonalité de couleur.

12. Système selon l'une quelconque des revendications 9 à 11, dans lequel ladite première composante d'image (41) est associée à une information de masquage qui limite l'aire affichée de la deuxième composante d'image (42) à l'aire qui n'est pas occupée par la première composante d'image(41).

13. Système selon l'une quelconque des revendications 1 à 12, comprenant un moyen (19) d'entrée de couleurs qui peut être connecté audit moyen (14) de recherche d'images et a pour fonction d'amener ledit moyen de recherche (14) à ne sélectionner que des images possédant des tonalités de couleur en rapport avec une couleur introduite via ledit moyen d'entrée de couleurs.

14. Système selon l'une quelconque des revendications 1 à 12, qui peut afficher une information de prix et, ou bien, de disponibilité associée à une image sélectionnée.

15. Système selon l'une quelconque des revendications 1 à 14, possédant un moyen (17) de connexion avec une station éloignée, qui assure la transmission d'une information de transaction à ladite station éloignée et la transmission de l'information de prix et, ou bien, de disponibilité en provenance de ladite station.

**Patentansprüche**

1. System für den Einzelhandelsverkehr mit einer Bildspeicheranordnung (11) zur Speicherung von Bildern zu handelnder Gegenstände, einer mit der Bildspeicheranordnung (11) verbundenen Bildkartei (12), die Kennzeichnungen der Bilder enthält, einer Bildwiedergabeanordnung (14) und Anzeigevorrichtung (13) zur Anzeige wiedergegebener Bilder, und einer Transaktionsdatenverarbeitungsanordnung (16) enthaltend eine Dateneingabeanordnung (15), **dadurch gekennzeichnet,** daß die Transaktionsdatenverarbeitungsanordnung (16) einen Transaktionsbestimmungsbetrieb durchführt, bei dem die Kennzeichnung für das gegenwärtig angezeigte Bild von der Bildkartei (12) automatisch in ein Transaktionsverzeichnis eingegeben wird, das von der Transaktionsdatenverarbeitungsanordnung (16) entsprechend den an der Dateneingabeanordnung (15) eingegebenen Transaktionsdaten erstellt wird, und durch welchen die Kennzeichnung des angezeigten Bildes automatisch aus der Bildkartei (12) eingegeben wird.

2. System nach Anspruch 1, in welchem die Bildspeicheranordnung (11) eine Videoplattenvorrichtung und die Anzeigevorrichtung (13) einen Videoschirm umfassen.

3. System nach Anspruch 1 oder 2, in welchem die Eingabeanordnung (15) eine alphanumerische Tastatur umfaßt.

4. System nach einem der Ansprüche 1 bis 3, in welchem die Dateneingabeanordnung (15) eine spezielle Funktionstaste umfaßt, die betätigbar ist, um die Transaktionsdatenverarbeitungsanordnung (16) in den Transaktionsbestimmungsbetrieb zu versetzen.

5. System nach einem der Ansprüche 1 bis 4, in welchem die Dateneingabeanordnung (15) eine spezielle Funktionstaste umfaßt, die betätigbar ist, um die Eingabeanordnung in den Bildwiedergabebetrieb zu versetzen.

6. System nach einem der Ansprüche 1 bis 5, in welchem die Bildkartei (12) ein kategorisiertes Bildverzeichnis enthält und die Wiedergabeanordnung(14) betätigbar ist zur Wiedergabe von Bildern auf der Grundlage der Kategorien.

7. System nach Anspruch 6, in welchem die Bildwiedergabeanordnung (14) betätigbar ist, um Bilder selektiv wiederzugeben, die in zwei oder mehr Kategorien fallen.

8. System nach Anspruch 6 oder 7, in welchem die Bildwiedergabeanordnung (14) automatisch betätigbar ist, um Bilder aufeinanderfolgend wiederzugeben.

9. System nach einem der Ansprüche 1 bis 8, in welchem die gespeicherten Bilder zusammengesetzte Bilder sind, die eine erste, von einem gehandelten Gegenstand erzeugte Bildkomponente (41) und eine zweite, durch Computer-Software erzeugte Bildkomponente (42) umfassen.

10. System nach Anspruch 9, in welchem die beiden Komponenten des zusammengesetzten Bildes in verschiedenen Teilen der Bildspeicheranordnung (11) gehalten werden.

11. System nach Anspruch 9 oder 10, in welchem die zweite Komponente (42) eine Information über Farbmuster umfaßt.

12. System nach einem der Ansprüche 9 bis 11, in welchem die erste Bildkomponente (41) mit einer Maskeninformation verbunden ist, die den Anzeigebereich der zweiten Bildkomponente (42) auf den Bereich beschränkt, der nicht von der ersten Bildkomponente (41) eingenommen ist.

13. System nach einem der Ansprüche 1 bis 12, das eine Farbeingabevorrichtung (19) umfaßt, die mit der Bildwiedergabeanordnung (14) verbindbar und betätigbar ist, um die Bildwiedergabeanordnung (14) zu veranlassen, nur Bilder auszuwählen, deren Farbmuster auf eine Farbe bezogen sind, die über die Farbeingabevorrichtung eingegeben wurde.

14. System nach einem der Ansprüche 1 bis 12, das betätigbar ist, um mit einem ausgewählten Bild verbundene Preis- und/oder Verfügbarkeitsinformationen anzuzeigen.

15. System nach einem der Ansprüche 1 bis 14, das eine Vorrichtung (17) enthält zur Verbindung mit einer entfernten Station für die Übertragung von Transaktionsinformationen zu der entfernten Station und für die Übertragung von Preis- und/oder Verfügbarkeitsinformationen von dieser Station.

FIG.1

FIG.2

| A | A | B | R | A | Z |  |  |  |  |  | D | E | D |
|---|---|---|---|---|---|---|---|---|---|---|---|---|---|
| 1 | 1 | 1 | 1 | 2 | 1 | - | - | - | - |  | 1 | 2 | 1 |
| 1 | 2 | 2 | 2 | 2 | 9 | - | - | - | - |  | 1 | 2 | 2 |
| x | x | x | x | x | x | - | - | - | - |  | x | x | x |
| x | x | x | x | x | x | - | - | - | - |  | x | x | - |
| x | x | x | x | x | - | - | - | - | - |  | x | x |  |
| x | x | x | x | - | - | - | - | - | - |  | x | - |  |
| x | x | x | x | - | - | - | - | - | - |  | x |  |  |
| x | x | x | x | - | - | - | - | - | - |  | x |  |  |

FIG.3

FIG.4

FIG.5

FIG.6